# EUROPEAN PATENT SPECIFICATION

(11) **EP 1 322 397 B1**
(45) Date of publication and mention of the grant of the patent: **29.08.2007**
(21) Application number: 01924010.0
(22) Date of filing: 05.04.2001
(51) Int. Cl.: B01D 33/11

(54) **DEVICE FOR SEPARATING SOLIDS FROM A FLUID MASS**
VORRICHTUNG ZUR ABTRENNUNG VON FESTSTOFFEN AUS EINER FLUIDMASSE
DISPOSITIF DE SEPARATION DE SOLIDES A PARTIR D'UNE MASSE FLUIDE

(30) Priority: 07.04.2000 NO 20001826
(43) Date of publication of application: 02.07.2003
(73) Proprietor: National Oilwell AS, 4069 Stavanger (NO)
(72) Inventor: BOTNMARK, Ketil, N-8516 Narvik (NO); MIKALSEN, Kjell, N-8515 Narvik (NO); MATHIASSEN, Svein, N-1389 Heggedal (NO)
(74) Representative: Onn, Thorsten
(86) International application number: PCT/NO2001/000145
(87) International publication number: WO 2001/076720

(56) References cited:
- GB-A- 2 114 014
- GB-A- 2 216 031
- NO-B- 303 323
- US-A- 4 306 975

## Description

The invention relates to a device for separating solids from a fluid mass, in particular cuttings from a drilling mud, which device comprises
a horizontal drum, rotatable about its axis, and having a first end and a second end and having a perforated shell between the said first and said second end;
a coaxial drum mandrel between the two ends, whereby an annular space is formed between the perforated shell and the drum mandrel;
blades in the annular space, which blades form a helical passage in the drum for the transport of the fluid mass and solids from said first end towards said second end when the drum rotates about its longitudinal axis;
a central inlet for the solids-containing fluid mass at said first end of the drum; and
a suction apparatus disposed against the outside of the perforated shell for providing a pressure differential across the perforated shell.

A device of this kind is known from NO 303323 B1.

Moreover, a drum-shaped rotating wire screen having an internal, centrally open thread and a central inlet for the medium to be filtered is known from US 1098076.

A device for separating solid particles from a liquid suspension is known from SE 440482. The separation is carried out through a horizontal rotating drum.

US 4306975 teaches a device in the form of a rotating drum made having a perforated shell. Inside the drum there is arranged a centrally open blade. The material to be filtered is fed in centrally at one end. There are also provided external and/or internal nozzles for spraying the shell surface of the drum.

GB 22106031 A teaches a device having a rotating perforated drum where the material that is to be filtered is fed in at the lower end of the slightly obliquely positioned rotating drum.

Norwegian Patent Application 954114 discloses a rotating drum constructed having a perforated shell for separating metal particles from a liquid.

Furthermore, DE 4239316 describes a filter apparatus in which there are used replaceable cells that form a filter housing.

In the aforementioned Norwegian patent NO 303323 B1, a suction apparatus is used against the outside of the perforated shell to provide a pressure differential across the perforated shell, in order to break down the surface tensions in the fluid mass, in addition to the natural breakdown of the surface tensions in the boundary layer of the fluid mass against the rotating drum shell. This is conducive to a more effective filtration.

One of the objects of the present invention is to provide a device as mentioned in the introduction, which device will have improved separation capacity.

It is also an object of the invention to provide a device of the said type that is environment-friendly.

According to the invention a device of the aforementioned type is therefore proposed, which device is characterised in that the drum is so designed and constructed that there is provided a wet zone extending from the said first end and a dry zone extending from the wet zone towards the said second end, which drying zone is associated with an external vacuum box resting against an area of the perforated drum shell with edge sealing, and in that between the central inlet and the said first end there is arranged a pre-chamber that is defined by an impervious end wall opposite the inlet, in which end wall there are provided through openings leading in towards the said passage between the drum mandrel and the perforated shell.

The central inlet in combination with the pre-chamber permits the build-up of a greater hydrostatic head in the first part of the drum, i.e., in the helical passage. This hydrostatic head decreases in the longitudinal direction of the drum in the wet zone. The vacuum box located in the dry zone acts to draw out liquid residues from the solids in the dry zone.

The increased hydrostatic head of the centrally fed-in fluid mass is conducive to better drainage, i.e., separation of the fluid into a collecting vessel.

It is especially advantageous if the device according to the invention can be arranged in a chamber sealed off from the surroundings which is associated with a device for providing a negative pressure in the chamber relative to the surroundings.

In this way the leakage of unwanted media into the surroundings is prevented, and this is of particular importance in the preferred application of the device, namely the filtration of drilling mud containing cuttings.

It is particularly advantageous if according to the invention the said device for providing negative pressure in the chamber could also be connected to the said vacuum box for providing the said differential pressure.

The device according to the invention can in this connection advantageously comprise a fan having an inlet side and an outlet side, the inlet side of the fan being connected to the said vacuum box and the outlet side of the fan being connected to an ejector that draws air from the chamber whilst using air supplied by the fan as motive agent for the ejector.

The said pre-chamber may be stationary and sealed off from the rotating drum by means of suitable gaskets, but it is preferable that the pre-chamber should be connected to the drum, i.e., constitutes an integral part thereof and rotates with the drum.

It is especially advantageous if the vacuum box can be constructed having a sump connected to an extraction means, for example, a gear pump, for fluid mass that collects in the sump.

According to the invention the extraction means can advantageously have an outlet that is connected to a flushing line having nozzles directed towards the outside of the perforated shell in the wet zone.

Advantageously, the flushing line can comprise a filter, for filtering out any solids, and a pump for pressurising the fluid in the flushing line.

According to the invention, each nozzle may also advantageously be associated with a shield that is arranged in front of the nozzle seen in the direction of rotation of the drum, These shields serve to disrupt or break the flow of fluid mass exiting through the perforated shell, so that this fluid mass does adversely affect the flushing media emitted from each nozzle for flushing the perforated shell.

The effect of the vacuum box can be adjusted so that the vacuum box works as and when required, and according to the invention the vacuum box may therefore be provided with an air escape valve that is regulated to a larger opening in accordance with increasing negative pressure in the vacuum box.

When there is no covering on the inside of the perforated shell in the area around the vacuum box, there is no reason to draw greater quantities of air through the vacuum box because there are no solids, e.g., cuttings, that need to be "dried". However, when there is a covering, i.e., a certain amount of cuttings, the negative pressure in the vacuum box will increase. The air escape valve is then regulated to a larger opening so that the amount of air through the drying box and the drying effect are optimal.

The rotating drum can advantageously have separate perforated shell plates, and according to the invention these perforated shell plates can advantageously lie across and clamp screen cloths in place against the blades and act as support plates for the screen cloths, thus preventing the screen cloths from being damaged by the hydrostatic pressure in the drum.

When separate perforated shell plates of this type are used, according to the invention the blades can advantageously be provided with peripheral notches that are aligned in the longitudinal direction of the drum, and in these aligned notches there is arranged a respective U-shaped rail where longitudinal gaskets are arranged for the screen cloths and associated perforated shell plates or support plates and locking elements for locking the support plates to the U-shaped rails.

According to the invention, the locking elements may advantageously comprise blocks along the edges of the longitudinal sides of the shell or support plates, and a counter block in the rail and an eccentric lock having an associated tension block for interaction with the support plate blocks.

The invention will now be described in more detail with reference to the drawings, wherein:
Figure 1 is a schematic partially cutaway side view of the device according to the invention;
Figure 2 shows the fluid mass and its decreasing hydrostatic head in the longitudinal direction of the drum;
Figure 3 shows the device according to the invention in a schematic side view, with an associated housing;
Figure 4 is a sectional view taken along the line IV-IV in Figure 3;
Figure 5 is a simplified sectional view taken along the line V-V in Figure 3;
Figure 6 is a schematic side view of the device in Figure 3, which section is displaced relative to the section in Figure 3;
Figure 7 is a sectional view taken along the line VII-VII in Figure 3;
Figure 8 is a sectional view taken along the line VIII-VIII in Figure 3;
Figure 9 is an isometric view of the drum;
Figure 10 is an isometric view of the drum in Figure 9 without its perforated shell;
Figures 11, 12 and 13 are sectional views through a preferred lock for the perforated shell plates and associated screen cloths;
Figure 14 is a schematic section through a preferred detail of the vacuum box; and
Figure 15 is a schematic section of a favourable nozzle arrangement with associated shields.

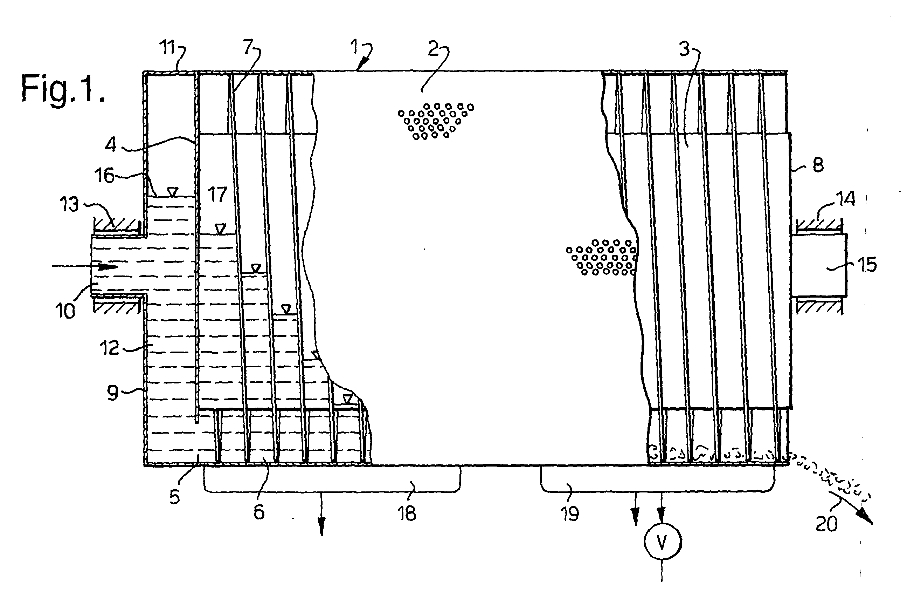

Figure 1 shows a horizontally arranged drum 1. The drum 1 has a perforated shell 2 and a coaxial drum mandrel 3 that is impervious at both ends. At the first end of the drum 1 the drum mandrel 3 is provided with an end wall 4 which has through openings 5 leading in towards a helical passage 6 between the drum mandrel 3 and the perforated shell 2. This helical passage 6 is formed by blades 7 that are secured to the drum mandrel 3. At the second end, the drum mandrel 3 has an impervious end wall 8 that is not shown in any detail.

At its first end, the drum 1 is provided with an end wall 9 having a central inlet 10. The end wall 9, together with the opposite end wall 4 of the drum mandrel and a surrounding shell wall 11, defines a pre-chamber 12 for the fluid mass, for example, drilling mud, that is to be filtered by use of the drum 1. The drum 1 is supported at both ends in suitable rotational bearings 13, 14, the central inlet 10 being used as a journal in the bearing 13, whilst from the other end wall 8 of the drum mandrel there extends a journal 15 that interacts with the bearing 14.

The drum 1 can be brought into rotation by a non-illustrated drive mechanism that is preferably connected to the journal 15.

Fluid mass is fed in through the central inlet 10 by means of a suitable, well-known and therefore non-illustrated rotating coupling with necessary sealing, for example, a gland seal.

A fluid level 16, 17 builds up in the pre-chamber 12 and in the helical passage 6. This fluid level decreases in the direction from the inlet end of the drum, as shown in Figure 1. The drum mandrel 3 has a relatively large diameter so that a substantial hydrostatic pressure can build up in the pre-chamber 12 and the helical passage 6. Fluid mass exits through the perforated shell 2 in a wet zone 18. In a subsequent dry zone 19, a negative pressure is provided with the aid of a fan V, and here liquid is drawn out of the solids, which ultimately pass out at the open second end of the drum 1, i.e., to the right in Figure 1.

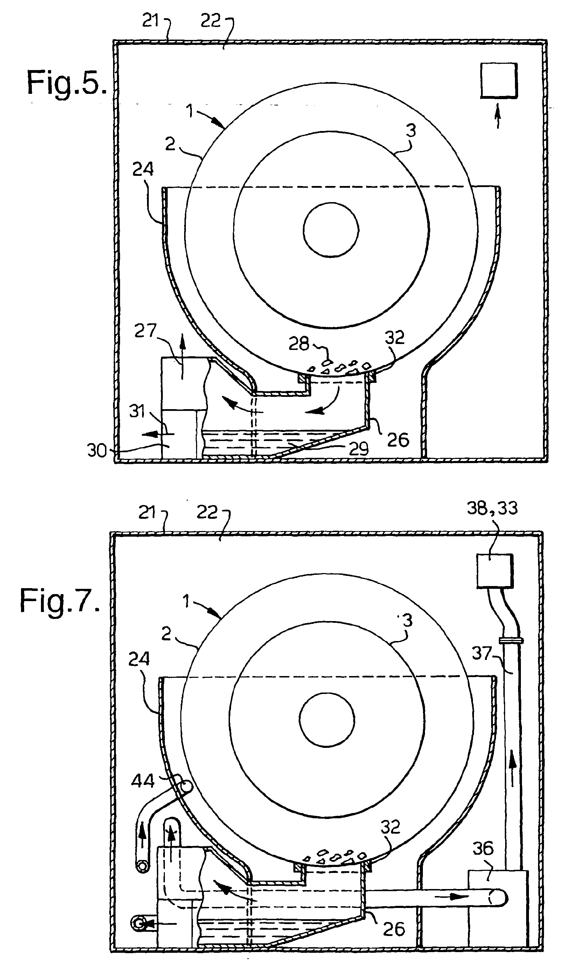

In Figure 4 the first end plate 4 of the drum mandrel is shown in more detail, and it can be seen that this end plate 4 covers the end of the drum mandrel 3 and extends right out towards the shell wall 11, there being cut out in this case three large openings 5 that provide a connection between the pre-chamber 12 and the helical passage 6.

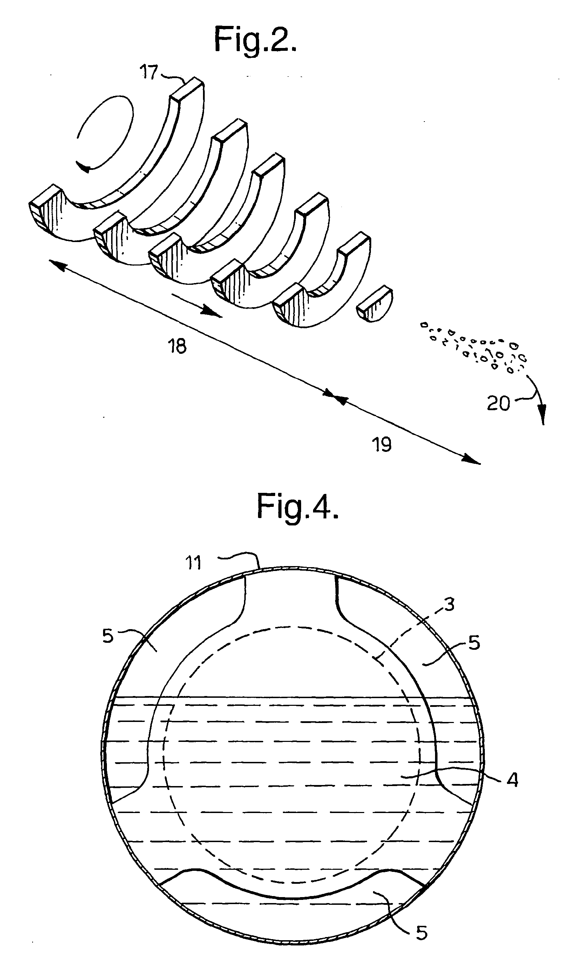

Figure 2 is a purely schematic illustration of how the mass level in the drum drops in the direction from the central inlet. The rather artistic illustration in Figure 2 thus shows how the hydrostatic pressure decreases in the direction from the inlet. In Figure 2 the designated quantities of mass 17 in the helical passage 6 are shown in a way that illustrates how the mass level decreases in the wet zone 18, and it is indicated how solids will be in the dry zone and ultimately pass out as indicated by the arrow 20, see also Figure 1.

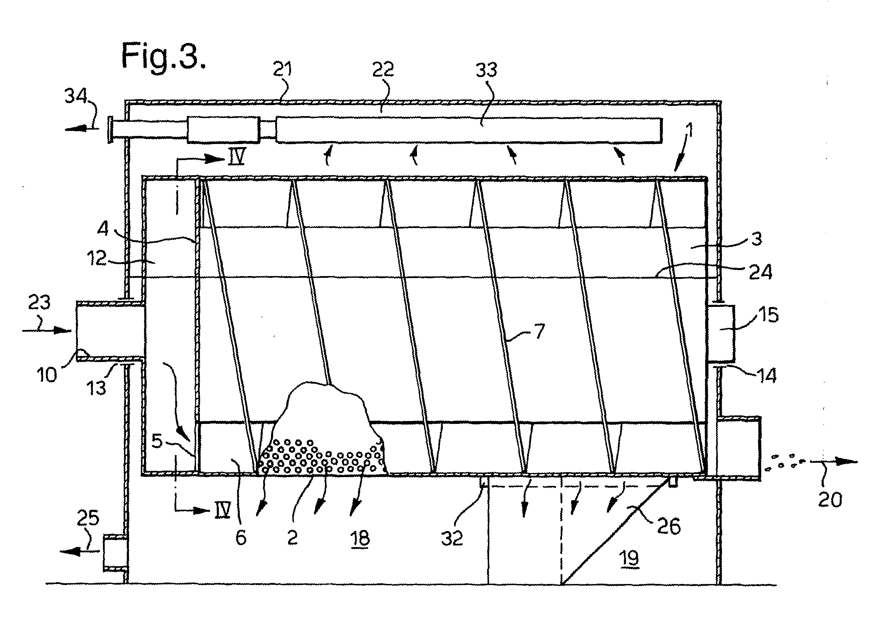

Figure 3 is a schematic side view of further details of the device in Figure 1.

In Figure 3 the blades 7 are shown greatly reduced in number so as not to encumber the drawing with unnecessary details. The drum 1 in Figure 3 is shown disposed in a housing 21 that defines a chamber 22. The drum 1 in Figure 3 is shown supported in the bearing 12 and 14 in the housing 21, but of course the drum 1 can also be supported in another manner, for example in suitable bearings/pedestals/supports inside the chamber 22.

When the device is in use, the drum 1 is rotated by a non-illustrated drive motor which, for example, can be connected to the journal 15. The fluid mass containing solids which is to be treated, for example, drilling mud containing cuttings, is fed in as shown by the arrow 23 through the central inlet 10 and passes into the pre-chamber 12. The fluid mass passes through the openings 5 and into the helical passage 6 and is transported towards the right in Figure 3 due to the rotation of the drum 1.

In the wet zone 18 the fluid mass will exit as indicated by the arrows, down into a collecting vessel 24 and out through a pipe in the housing 21, as shown at 25.

The drum 1 is designed and constructed so that essentially all fluid mass passes out in the wet zone 18 provided, which means that in the subsequent dry zone 19 essentially only solids are found. These solids pass out as shown at 20.

A vacuum box 26 is provided in the dry zone 19, see also Figure 5. This vacuum box 26 is put under negative pressure in that air is drawn out as indicated by the arrow 27 in Figure 5. Thus, liquid is withdrawn from the solids 28 and drawn down into the vacuum box 26. The vacuum box 26 has a sump 29 where the liquid can collect. The liquid collected is drawn out of this sump 20 by an extraction means 30, as shown by the arrow 31.

The vacuum box 26 is sealed off from the rotating perforated shell 2 by means of suitable sealing strips 32.

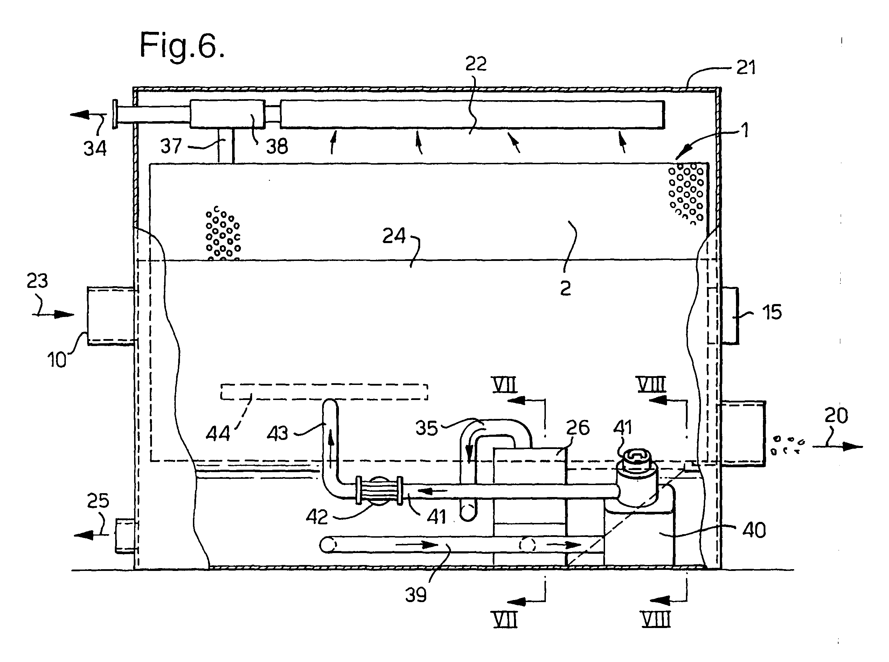

The chamber 22 can be maintained under a negative pressure relative to the surroundings by means of a ventilating box 33 through which air can be drawn out as shown by the arrows, which air exits at 34. This ventilating or vacuum system will be explained in more detail below in connection with a further discussion of a practical exemplary embodiment, as shown in Figures 6-8.

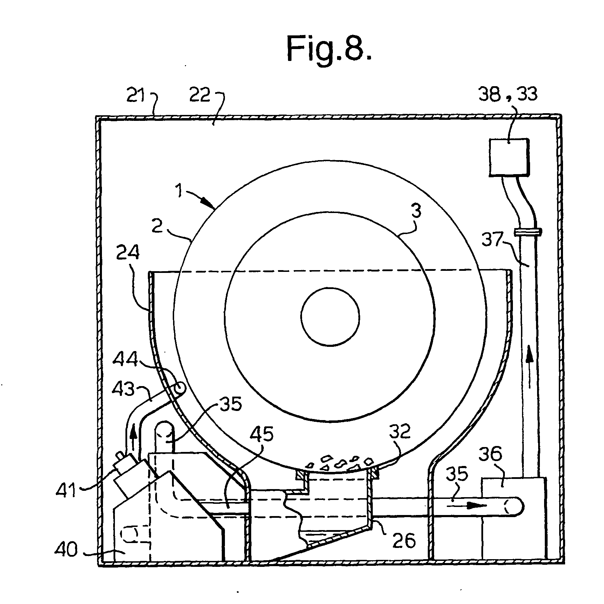

From the vacuum box 26 there runs a line 35 to a fan 36, arranged on the other side of the collecting vessel 24 in the housing 21, as shown in Figures 7 and 8, and from this fan 36 there runs a line 37 through which the air supplied by the fan passes to an ejector 38. The air supplied by the fan 36 acts as a motive agent for the ejector, so that the ejector 38 will draw air from the ventilating box 33 and out as shown at 34 in Figure 6.

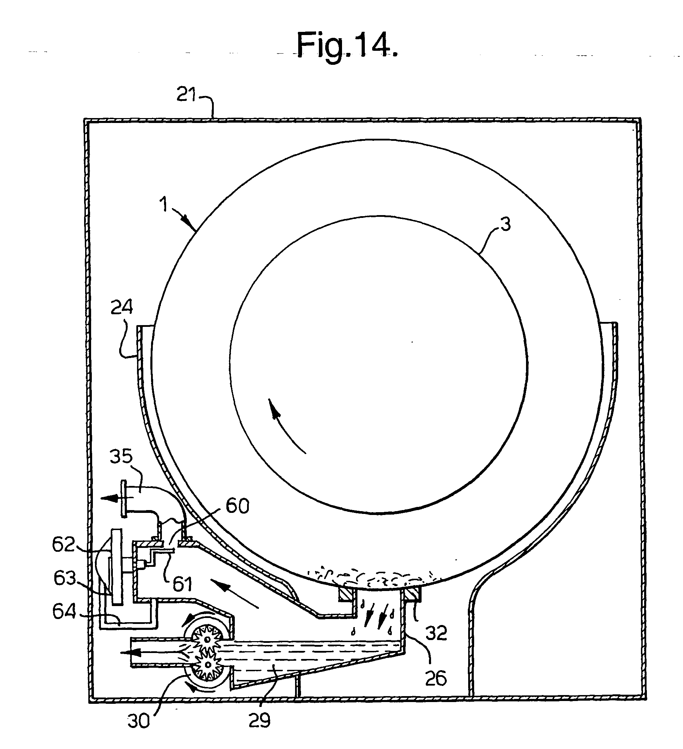

The fluid collected in the vacuum box 36 sump 39 (see Figure 5) is drawn therefrom by means of the extraction means 30, which advantageously can be a gear pump that is known per se. This gear pump 30, see Figure 14, has polyurethane teeth on the gear wheel instead of teeth of steel. The reason for this is that if a screen cloth in the drum is damaged, large particles may enter the gear pump 30. Normally, a standard gear pump will break down when subject to overly large particles, i.e., the teeth are crushed. By using polyurethane teeth, larger particles will be absorbed in the relatively soft polyurethane without damaging the teeth or the gear pump 30 as a whole. The gear pump clenches and evacuates and also absorbs larger particles without breaking down.

The outlet side of the gear pump is connected to a line 39 which comes from the collecting vessel 24 and runs to a filter apparatus 40 which has a replaceable filter 41 from the filter apparatus 40 for a line 41 to a pump 42, and from the pump 42 there runs a line 43 to, in this case, a flushing pipe 44 inside the collecting vessel 24. In this case, the flushing pipe 44 has non-illustrated nozzles that are directed towards the perforated shell 2. From the filter apparatus 40 a line 45 runs into the collecting vessel 24. An excess of fluid mass can pass from the filter apparatus 40 into the collecting vessel 24 through this line 45.

It is not shown but the filter apparatus 40 can have a connected detergent supply, so that detergent can be added to the flushing medium.

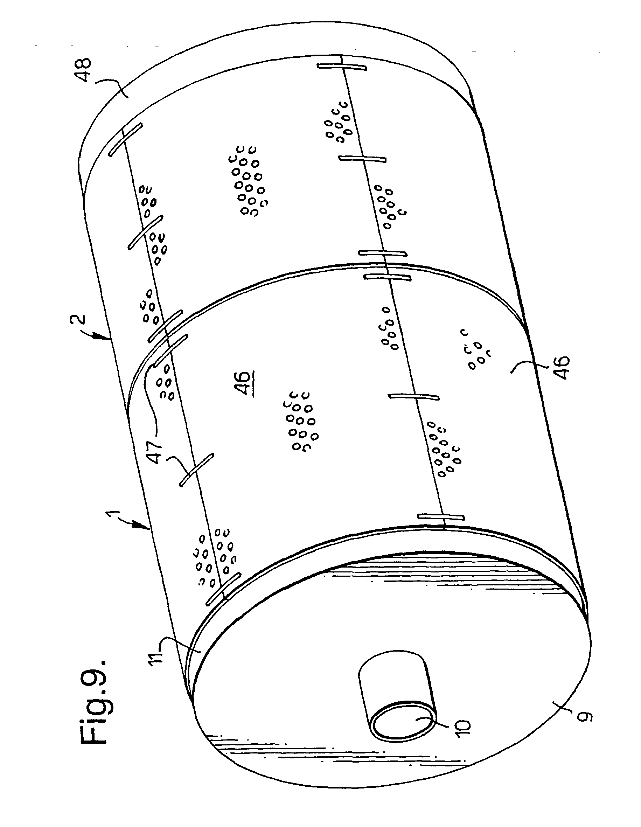

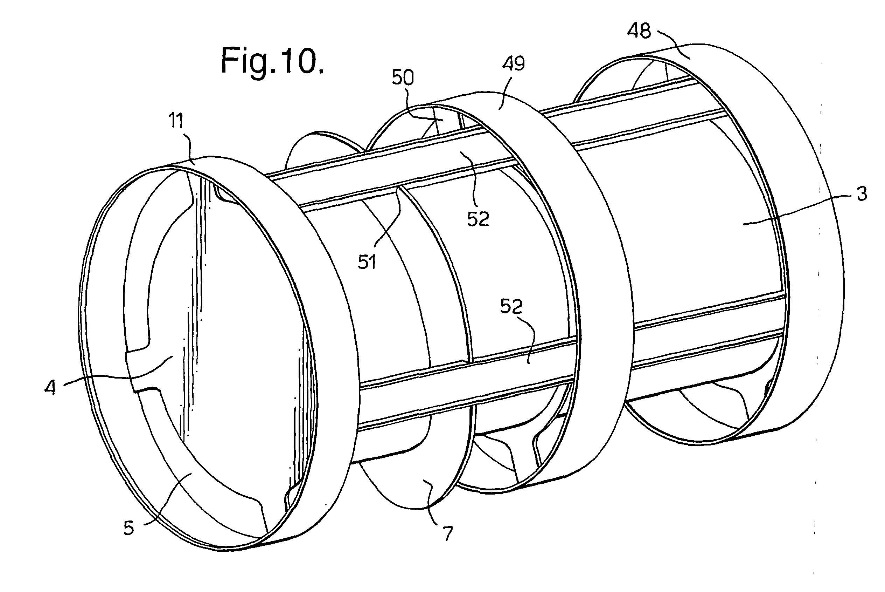

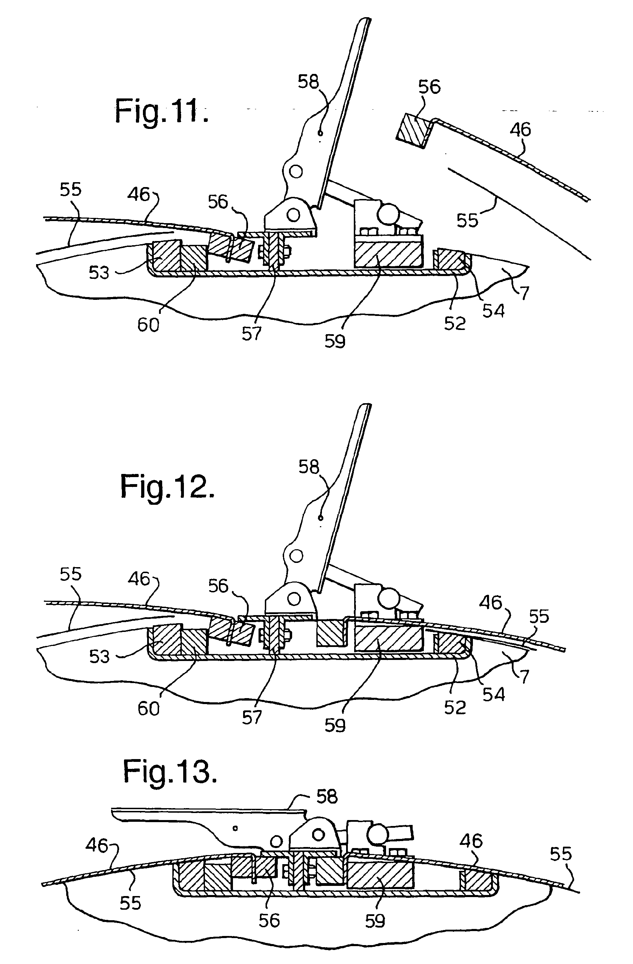

The drum 1 has a special structural design which is shown in more detail in the isometric views in Figures 9 and 10. As shown in Figure 9, the perforated shell 2 is built up of several, separate perforated shell plates 46 that are fixed in place by suitable tension locks 47. The tension locks 47 will be described in more detail below in connection with Figures 11-13.

As shown in Figure 10, the drum 1 is built up having a drum mandrel 3 in the form of a circular-cylindrical plate body closed at both ends. One of the ends 4 is made having a greater diameter and is connected to a shell ring 11. At the other end the drum mandrel 3 is closed by an end plate 8, see Figure 1. At the other end of the drum where, as previously explained, the solids exit, there is arranged a shell ring 48, the said end plate 8 being made like the end plate 4, and between the two end plates 4 and 8 or shell rings 11, 48 there is disposed a third shell ring 49 supported by webs 50 projecting from the drum mandrel 3. From a purely structural point of view, the webs 50 can be parts of a plate like the end plate 4 or 8 and welded between two parts of the drum mandrel 3. The purpose of the shell rings 11, 48 and 49, in addition to the shell rings 11 acting as a wall for the pre-chamber 12, see Figure 3, is to form a support for the mounting of the separate perforated shell plates 46, see Figure 9.

In Figure 10, for the sake of simplicity, just one spiral 7 is shown, there being a greater number of spirals, see for instance Figure 1.

Peripheral notches 51 that are aligned with one another in the longitudinal direction are cut out in the spirals, and, as shown in Figure 10, U-shaped rails 52 are inserted in these aligned notches. These rails 52 serve for the mounting of the separate perforated shell plates 46, in a way that is shown in more detail in Figures 11-13.

In Figures 11-13 a section of a blade 7 is shown having a notch 51 in which there is placed a U-shaped rail 52. A respective gasket 53, 54 is paced along the edge flanges in this U-shaped rail 52.

The shell surface is built up of a plurality of perforated shell plates 46 with a respective underlying screen cloth 55. Along the longitudinal edges, each perforated shell plate 46 has a block or strip 56 that is placed in the rail 52, as shown in the sequential Figures 11, 12 and 13. In Figures 11, 12 and 13 there is shown a section from two shell plates 46, and to the left one of the longitudinal sides of a shell plate 46 is shown, whilst to the right the other longitudinal side of a shell plate 46 is shown. A shell plate 46 thus has two longitudinal edges made as the longitudinal edges shown in Figures 11-13.

The block 56 at one of the longitudinal edges of the shell plate 46 is placed inside the rail 52 as shown to the left in Figure 11, whilst the other longitudinal edge is placed in an adjacent rail, in the same way as shown to the right in Figures 11-13.

In the rail 52 there is mounted on a locking rail 57 an eccentric lock 58 with which a tension block 59 can be actuated. The tension block 59 remains behind the block 56, as is made clear in Figures 11-13, and will move towards this block and tighten the shell plate 46 as shown when the eccentric lock 58 is tightened and locked.

Under each perforated shell plate 46 there is placed a screen cloth 55, as in the Figures 11-13. The respective screen cloth 55 is pressed against the gaskets 53, 54 when the associated shell plate 46 is put in place, tightened and locked as shown in Figures 11-13.

In the U-shaped rail 52, in addition to the longitudinal gaskets 53, 54 there is also placed a block or strip 60 as counter block for the block/strip 56 on one of the longitudinal edges of the shell plate 46, as shown to the left in Figures 11-13.

Figure 14 shows in a section through the device an interesting detail in connection with the vacuum box 26 and the evacuation of air therefrom through the line 35. The opening 60 in the vacuum box 26 leading out in the line 35 is attached to a valve disc 61 which in turn is connected to a membrane 62 in a housing 63 which through a line 64 is connected to the chamber in the vacuum box 26. The opening 60 in a normal "closed" position of the valve disc 61 is small, so that only a limited amount of air exits. The valve disc 61 will be in such a "closed" position when there is no "covering" of the screen cloth over the opening limited by the vacuum chamber 26 gasket 32. The term "covering" in this case means that there is a suitable amount of solids over the opening. When there is an insufficient quantity of solids, i.e., insufficient covering, there is no reason to draw larger amounts of air through the vacuum box 26 and out through the line 35, because then there are no solids lying across the opening limited by the gasket 32 that need to "be dried".

However, when there is a "covering", i.e., that the drum contains more solids, for example cuttings when it is drilling mud that is being treated, the negative pressure in the vacuum box 26 will increase. The membrane 62 will be actuated through the pipe connection 64 and will pull the disc 61 in order to provide a larger opening at 60. Thus the quantity of air increases through the vacuum box 26 and the drying effect is optimal.

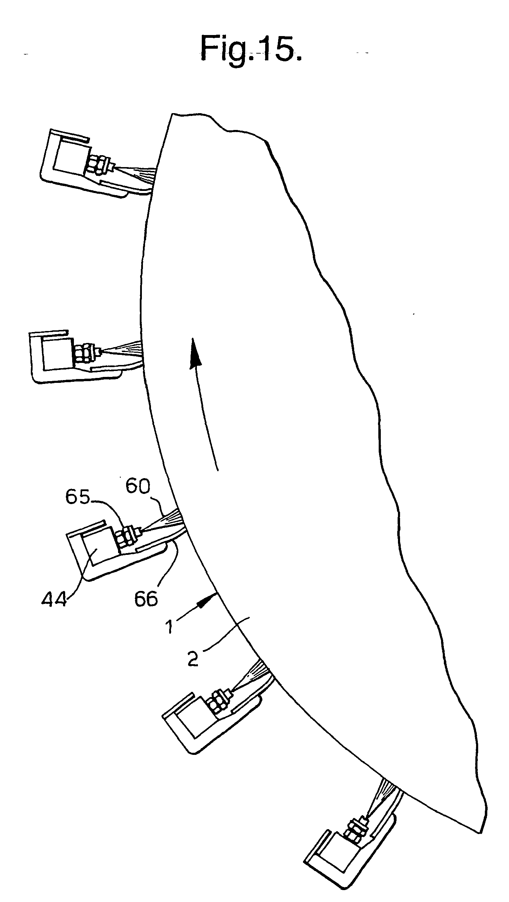

Fig. 15 shows a section of the drum 1 with a favourable nozzle arrangement for flushing the perforated shell 2 in the wet zone. In the above, a flushing line 44 has been shown and described, see for example Figure 7. Of course, several parallel flushing lines 44 could be used, as shown in Figure 15, where there are five flushing lines, all connected to the lines 43 an the pump 42 (Figure 6) by means of a suitable manifold.

Each of these flushing lines 44 has a plurality of nozzles 65 that send a flushing jet 60 towards the perforated shell 2. Each flushing line 44 in front of the associated nozzles is provided with a longitudinal shield plate 66. The purpose of this shield plate 66, which is arranged in front of the nozzles 65, seen in the direction of rotation of the drum I, is to disrupt or break the fluid streams that pass out through the perforated shell 2 from the interior of the drum 1, i.e., the helical passage 6.

The housing 21 may advantageously be made as a container, i.e., as a vessel which can be lifted with suitable equipment and placed in the desired location. The housing 21 or container may be provided with non-illustrated corners and feet with locking devices, as known from freight containers. The illustrated and described device is especially favourable as regards the surrounding or environment because the entire process takes place inside a closed chamber where a negative pressure prevails.

A typical rate of flow for a facility of the type shown is 200/300 l/min at a rotational speed 7-17 revolutions/min. The screen cloth may preferably have a mesh size of 50-1000 microns (thousandth of a millimetre).

The perforation openings should be as large as possible (largest possible opening area), for example 60-70% clear opening.

The ratio between the diameter of the drum mandrel and the diameter of the drum shell is advantageously 1:1.2-1.8.

## Claims

1. A device for separating solids from a fluid mass, in particular cuttings from a drilling mud, which device comprises
a horizontal drum (1), rotatable about its axis, and having a first end and a second end and having a perforated shell (2) between the said first and said second end;
a coaxial drum mandrel (3) between the two ends, whereby an annular space is formed between the perforated shell (2) and the drum mandrel (3); blades (7) in the annular space, which blades (7) form a helical passage (6) in the drum (1) for the transport of the fluid mass and solids from said first end towards said second end when the drum (1) rotates about its longitudinal axis;
a central inlet (10) for the solids-containing fluid mass at said first end of the drum (1); and
a suction apparatus (26) disposed against the outside of the perforated shell (2) for providing a pressure differential across the perforated shell (2) in a wet zone (18), **characterised in that** the drum (1) is so designed and constructed that there is provided a wet zone (18) extending from the said first end and a dry zone (19) extending from the wet zone (18) towards the said second end, which dry zone (19) is associated with an external vacuum box (26) resting against an area of the perforated drum shell (2) with edge sealing (32), and **in that** between the central inlet (10) and the said first end there is arranged a pre-chamber (12) that is defined by an impervious end wall (4) opposite the inlet (10), in which end wall (4) there are provided through openings (5) leading in towards the said passage (6) between the drum mandrel (3) and the perforated shell (2).

2. A device according to claim 1, **characterised in that** it is located in a chamber (22) sealed off from the surroundings and associated with a device (33, 38) for providing a negative pressure in the chamber (22) relative to the surroundings.

3. A device according to claim 2, **characterised in that** the device (33, 38) for providing the negative pressure in the chamber (22) is connected to the said vacuum box (26) for providing said differential pressure.

4. A device according claim 3, **characterised in that** it comprises a fan (36) having an inlet side and an outlet side, the inlet side of the fan (36) being connected (35) to said vacuum box (26) and the outlet side of the fan (36) being connected to (37) to an ejector (38) that draws air from the chamber (22).

5. A device according to claims 1-4, **characterised in that** the pre-chamber (12) is connected to the drum (1) and rotates with it.

6. A device according to one of the preceding claims, **characterised in that** the vacuum box (26) is made having a sump (29) that is associated with an extraction means (30), e.g., a gear pump, for fluid mass that collects in the sump (29).

7. A device according to claim 6, **characterised in that** the extraction means (30) has an outlet that is connected to a flushing line (44) equipped with nozzles (65) directed towards the outside of the perforated shell (2) in the wet zone (18).

8. A device according to claim 7, **characterised in that** the flushing line (39,41,43,44) comprises a filter apparatus (40) and a pump (42).

9. A device according to claims 7 and 8, **characterised in that** each nozzle (65) is associated with a shield (66) arranged in front of the nozzle (65) seen in the direction of rotation of the drum (1).

10. A device according to one of the preceding claims, **characterised in that** the vacuum box (26) is provided with an air escape valve (61) that is regulated to a larger opening in accordance with increasing negative pressure in the vacuum box (26).

11. A device according to one of the preceding claims, where the drum (1) has separate, perforated shell plates (46), **characterised in that** these perforated shell plates (46) lie on top of and clamp screen cloths (55) in place against the blades (7) and act as support plates for the screen cloths (55), so that the screen cloths (55) are not damaged by the hydrostatic pressure in the drum (1).

12. A device according to claim 11, **characterised in that** the blades (7) are provided with peripheral notches (51) that are aligned in the longitudinal direction of the drum (1) and that in the aligned notches there is arranged a respective U-shaped rail (52) where there are arranged longitudinal gaskets (53, 54) for the screen cloth (55) and associated perforated shell or support plates (46), and locking elements (56, 57, 58, 59) for locking the shell/support plates (46) to the rails (52).

13. A device according to claim 12, **characterised in that** the locking elements comprise blocks (56) along the edges of the longitudinal sides, and a counter block (60) in the rail (52) and an eccentric lock (58) with an attached tension block (59) for interaction with the support plate blocks (56).

## Patentansprüche

1. Vorrichtung zur Abtrennung von Feststoffen aus einer Fluidmasse, insbesondere von Bohrgut aus einem Bohrschlamm, umfassend:
eine horizontale Trommel (1), die um ihre Achse drehbar ist und ein erstes Ende und ein zweites Ende aufweist sowie einen perforierten Mantel (2) zwischen dem ersten und dem zweiten Ende;
eine koaxiale Trommelwelle (3) zwischen den beiden Enden, wodurch zwischen dem perforierten Mantel (2) und der Trommelwelle (3) ein ringförmiger Raum gebildet ist;
Stege (7) im ringförmigen Raum, wobei die Stege (7) einen schraubenförmigen Durchgang (6) in der Trommel (1) für den Transport der Fluidmasse und der Feststoffe von dem ersten Ende zu dem zweiten Ende bilden, wenn die Trommel (1) sich um ihre Längsachse dreht;
einen mittigen Einlass (10) für die feststoffhaltige Fluidmasse an dem ersten Ende der Trommel (1); und
eine an die Aussenseite des perforierten Mantels (2) angelegte Absaugvorrichtung (26) zur Herstellung eines Druckunterschieds über den perforierten Mantel (2) in einer Nasszone (18),
**dadurch gekennzeichnet, dass** die Trommel (1) derart gestaltet und konstruiert ist, dass sich eine Nasszone (18) ergibt, die sich von dem ersten Ende erstreckt, und eine Trockenzone (19), die sich von der Nasszone (18) zu dem zweiten Ende hin erstreckt, wobei die Trockenzone (19) mit einem externen Vakuumkasten (26) verbunden ist, der mit Kantendichtung (32) an einem Bereich des perforierten Trommelmantels (2) anliegt, und dass zwischen dem mittigen Einlass (10) und dem ersten Ende eine Vorkammer (12) angeordnet ist, die durch eine undurchlässige Stirnwand (4) gegenüber dem Einlass (10) begrenzt wird, wobei die Stirnwand (4) durchgehende Öffnungen (5) aufweist, die in den Durchgang (6) zwischen der Trommelwelle (3) und dem perforierten Mantel (2) münden.

2. Vorrichtung nach Anspruch 1, **dadurch gekennzeichnet, dass** sie in einer gegenüber der Umgebung abgeschlossenen Kammer (22) angeordnet ist und mit einer Vorrichtung (33, 38) zur Herstellung eines Unterdrucks in der Kammer (22) gegenüber der Umgebung verbunden ist.

3. Vorrichtung nach Anspruch 2, **dadurch gekennzeichnet, dass** die Vorrichtung (33, 38) zur Herstellung des Unterdrucks in der Kammer (22) mit dem Vakuumkasten (26) verbunden ist, um den Differenzdruck zu liefern.

4. Vorrichtung nach Anspruch 3, **dadurch gekennzeichnet, dass** sie ein Gebläse (36) mit einer Einlassseite und einer Auslassseite umfasst, wobei die Einlassseite des Gebläses (36) mit dem Vakuumkasten (26) verbunden (35) und die Auslassseite des Gebläses (36) mit einem Ejektor (38) verbunden (37) ist, der Luft aus der Kammer (22) absaugt.

5. Vorrichtung nach den Ansprüchen 1 bis 4, **dadurch gekennzeichnet, dass** die Vorkammer (12) mit der Trommel (1) verbunden ist und mit dieser mitdreht.

6. Vorrichtung nach einem der vorstehenden Ansprüche, **dadurch gekennzeichnet, dass** der Vakuumkasten (26) mit einem Sumpf (29) ausgestattet ist, der mit einem Absaugmittel (30), z.B. einer Zahnradpumpe, für Fluidmasse verbunden ist, die sich im Sumpf (29) ansammelt.

7. Vorrichtung nach Anspruch 6, **dadurch gekennzeichnet, dass** das Absaugmittel (30) einen Auslass aufweist, der mit einer Spülleitung (44) mit Düsen (65) verbunden ist, die in der Nasszone (18) auf die Aussenseite des perforierten Mantels (2) gerichtet sind.

8. Vorrichtung nach Anspruch 7, **dadurch gekennzeichnet, dass** die Spülleitung (39, 41, 43, 44) eine Filtervorrichtung (40) und eine Pumpe (42) umfasst.

9. Vorrichtung nach den Ansprüchen 7 und 8, **dadurch gekennzeichnet, dass** in Drehrichtung der Trommel (1) gesehen den Düsen (65) je ein vor der Düse (65) angeordneter Schild (66) zugeordnet ist.

10. Vorrichtung nach einem der vorstehenden Ansprüche, **dadurch gekennzeichnet, dass** der Vakuumkasten (26) ein Entlüftungsventil (61) aufweist, das mit steigendem Unterdruck im Vakuumkasten (26) auf eine grössere Öffnung geregelt wird.

11. Vorrichtung nach einem der vorstehenden Ansprüche, bei der die Trommel (1) getrennte perforierte Mantelbleche (46) aufweist, **dadurch gekennzeichnet, dass** diese perforierten Mantelbleche (46) auf Siebgeweben (55) aufliegen und diese auf den Stegen (7) festklemmen und als Trägerbleche für die Siebgewebe (55) dienen, so dass die Siebgewebe (55) vom hydrostatischen Druck in der Trommel (1) nicht beschädigt werden.

12. Vorrichtung nach Anspruch 11, **dadurch gekennzeichnet, dass** die Stege (7) mit umfänglichen Aussparungen (51) versehen sind, die in der Längsrichtung der Trommel (1) aufeinander ausgerichtet sind, und dass in den aufeinander ausgerichteten Aussparungen jeweils eine U-förmige Schiene (52) mit darin angeordneten Längsdichtungen (53, 54) für das Siebgewebe (55) und zugehörigen perforierten Mantel- oder Trägerblechen (46) angeordnet ist, sowie Verriegelungselemente (56, 57, 58, 59) zum Verriegeln der Mantel-/Trägerbleche (46) mit den Schienen (52).

13. Vorrichtung nach Anspruch 12, **dadurch gekennzeichnet, dass** die Verriegelungselemente Klötze (56) entlang den Kanten der Längsseiten und einen Gegenklotz (60) in der Schiene (52) und einen exzentrischen Verschluss (58) mit einem daran befestigten Spannklotz (59) umfassen, der mit den Trägerblechklötzen (56) zusammenwirkt.

## Revendications

1. Dispositif de séparation de solides à partir d'une masse fluide, en particulier de déblais de forage à partir d'une boue de forage, lequel dispositif comprend
un tambour horizontal (1) pouvant tourner autour de son axe et ayant une première extrémité et une deuxième extrémité et ayant une enveloppe perforé (2) entre ladite première et ladite deuxième extrémité;
un mandrin de tambour (3) coaxial entre les deux extrémités, formant un espace annulaire entre l'enveloppe perforé (2) et le mandrin de tambour (3);
des lames (7) dans l'espace annulaire, lesquelles lames (7) forment un passage hélicoïdal (6) dans le tambour (1) pour le transport de la masse fluide et des matières solides de ladite première extrémité vers ladite deuxième extrémité lorsque le tambour (1) tourne autour de son axe longitudinal;
une entrée centrale (10) pour la masse fluide contenant des matières solides, à ladite première extrémité du tambour (1); et
un appareil d'aspiration (26) placé contre l'extérieur de l'enveloppe perforé (2) afin d'assurer dans une zone humide (18) une différence de pression à travers l'enveloppe perforé (2),
**caractérisé en ce que** le tambour (1) est conçu et construit de manière à créer une zone humide (18) s'étendant à partir de ladite première extrémité et une zone sèche (19) s'étendant depuis la zone humide (18) vers la deuxième extrémité, laquelle zone sèche (19) est associée à un caisson à vide (26) externe placé contre une partie de l'enveloppe perforé (2) avec étanchéité des bords (32), et **en ce que**, entre l'entrée (10) centrale et la première extrémité, une préchambre (12) est agencée qui est définie par une paroi d'extrémité (4) imperméable à l'opposé de l'entrée centrale (10), laquelle paroi d'extrémité (4) est munie d'orifices traversants (5) menant audit passage (6) entre le mandrin de tambour (3) et l'enveloppe perforé (2).

2. Dispositif selon la revendication 1, **caractérisé en ce qu'**il est disposé dans une chambre (22) scellée contre extérieur et associé à un dispositif (33, 38) destiné à créer dans la chambre (22) une pression négative par rapport à l'extérieur.

3. Dispositif selon la revendication 2, **caractérisé en ce que** le dispositif (33, 38) destiné à créer la pression négative dans la chambre (22) est relié audit caisson à vide (26) pour fournir ladite pression différentielle.

4. Dispositif selon la revendication 3, **caractérisé en ce qu'**il comprend un ventilateur (36) ayant un côté d'admission et un côté de sortie, le côté d'admission du ventilateur (36) étant relié (35) audit caisson à vide (26) et le côté de sortie du ventilateur (36) étant relié (37) à un éjecteur (38) qui aspire de l'air hors de la chambre (22).

5. Dispositif selon les revendications 1 à 4, **caractérisé en ce que** la préchambre (12) est reliée au tambour (1) et tourne avec celui-ci.

6. Dispositif selon l'une quelconque des revendications précédentes, **caractérisé en ce que** le caisson à vide (26) est muni d'un puisard (29) qui est associé à un moyen d'extraction (30), p.ex. une pompe à engrenages, pour la masse fluide s'accumulant dans le puisard (29).

7. Dispositif selon la revendication 6, **caractérisé en ce que** le moyen d'extraction (30) a une sortie qui est reliée à une conduite de rinçage (44) équipée de buses (65) dirigées contre le côté extérieur de l'enveloppe perforé (2) dans la zone humide (18).

8. Dispositif selon la revendication 7, **caractérisé en ce que** la conduite de rinçage (39, 41, 43, 44) comprend un dispositif de filtrage (40) et une pompe (42).

9. Dispositif selon les revendications 7 et 8, **caractérisé en ce que** chaque buse (65) est associée à un écran (66) agencé devant la buse (65) vue dans la direction de rotation du tambour (1).

10. Dispositif selon l'une quelconque des revendications précédentes, **caractérisé en ce que** le caisson à vide (26) est muni d'une soupape d'échappement d'air (61) qui est réglée à une ouverture plus grande avec une pression négative croissante dans le caisson à vide (26).

11. Dispositif selon l'une quelconque des revendications précédentes, où le tambour (1) présente des plaques d'enveloppe (46) perforées séparées, **caractérisé en ce que** ces plaques d'enveloppe (46) perforées reposent sur et serrent des toiles de tamis (55) en place contre les lames (7) et servent de plaques de support pour les toiles de tamis (55), de sorte que les toiles de tamis (55) ne sont pas endommagées par la pression hydrostatique dans le tambour (1).

12. Dispositif selon la revendication 11, **caractérisé en ce que** les lames (7) sont pourvues d'entailles périphériques (51) qui sont alignées dans la direction longitudinale du tambour (1), et que dans les entailles alignées sont agencés des rails (52) respectifs en U où sont agencés des joints longitudinaux (53, 54) pour la toile de tamis (55) et des plaques d'enveloppe ou de support (46) perforées associées, ainsi que des éléments de verrouillage (56, 57, 58, 59) pour verrouiller les plaques d'enveloppe/de support (46) sur les rails (52).

13. Dispositif selon la revendication 12, **caractérisé en ce que** les éléments de verrouillage comprennent des blocs (56) le long des bords des côtés longitudinaux et un bloc d'appui (60) dans le rail (52) et une fermeture excentrique (58) avec un bloc de tension (59) y attaché pour interaction avec les blocs (56) de la plaque de support.
